# EUROPEAN PATENT SPECIFICATION

(11) **EP 3 113 606 B1**
(45) Date of publication and mention of the grant of the patent: **09.04.2025**
(21) Application number: 15711854.8
(22) Date of filing: 19.02.2015
(51) Int. Cl.: A01K 47/06

(54) **DEVICE AND RESPECTIVE CONTROL METHOD FOR CONTROLLING THE ACTIVITIES OF A COLONY OF INSECTS**
VORRICHTUNG UND ZUGEHÖRIGES STEUERUNGSVERFAHREN ZUR STEUERUNG DER AKTIVITÄTEN EINER KOLONIE VON INSEKTEN
DISPOSITIF ET PROCÉDÉ DE CONTRÔLE RESPECTIF DES ACTIVITÉS D'UNE COLONIE D'INSECTES

(30) Priority: 05.03.2014 IT VR20140054
(43) Date of publication of application: 11.01.2017
(73) Proprietor: Melixa S.r.l., 38121 Trento (TN) (IT)
(72) Inventor: BENEDETTI, Manuel, 38123 Trento (TN) (IT); MARTINELLI, Mauro, 38122 Trento (TN) (IT); IORIATTI, Luca, 38042 Baselga di Pine - Trento (TN) (IT)
(74) Representative: Braidotti, Andrea
(86) International application number: PCT/IB2015/051259
(87) International publication number: WO 2015/132689

(56) References cited:
- WO-A2-2013/143552
- BE-A6- 1 011 050
- FR-A1- 2 820 536
- US-A1- 2010 062 683
- JENNIFER M CAMPBELL ET AL: "Capacitance-based sensor for monitoring bees passing through a tunnel; Capacitance-based sensor for monitoring bees passing through a tunnel", MEASUREMENT SCIENCE AND TECHNOLOGY, IOP, BRISTOL, GB, vol. 16, no. 12, 1 December 2005 (2005-12-01), pages 2503 - 2510, XP020090486, ISSN: 0957-0233, DOI: 10.1088/0957-0233/16/12/015
- STRYE M ET AL: "MONITORING HONEY-BEES: THE DESIGN OF A COMPUTER-OPERATED BEE COUNTER", PROCEEDINGS OF THE SECTION EXPERIMENTAL AND APPLIED ENTOMOLOGY,14 DECEMBER 1990, UTRECHT, NL, AMSTERDAM, NL, vol. 2, 1 January 1991 (1991-01-01), pages 150 - 153, XP000490265

## Description

The present invention relates to a device and respective control method for controlling the activities of a colony of insects.

In particular, the present invention is advantageously used in the analysis and study of the activities, behaviors and movements of a colony or swarm of insects, preferably bees or similar, to which the following description will make explicit reference without thereby losing its generality, with also the detection of some environmental parameters in correspondence to a specific area in which such insects live and work.

It is universally known that the study of the biological aspects of the bees in natural or artificial hives is always been of great importance in agriculture to understand the state of ecosystems and their future development, due to the crucial role that bees themselves take in pollination and in sexual reproduction of a large part of plants and vegetables.

Nowadays for this reason not only beekeepers and farmers are numerous, but also scholars and scientists observe carefully the behavior of the bees with the aim of analyzing the important environmental consequences resulting from this, even as a function of the impact that these have consequently on man and on the ability to produce foodstuffs. These analyses are often the result of daily observation methodologies and control over the activities of bees near the hives, and become a very important factor in terms of time and cost, especially in the case of very large regions and very high density of hives.

Furthermore, the various sensor devices, of a mechanical or hydraulic type for weighing and/or counting nowadays used by such methodologies in order facilitate and integrate the visual monitoring of the activities of the bees, are very often inaccurate and incomplete, requiring a constant and complex maintenance, and with a high energy An example of a device for controlling the activity of insects is disclosed in the scientific paper "Capacitance-based sensor for monitoring bees passing through a tunnel; Capacitance-based sensor for monitoring bees passing through a tunnel" by Jennifer M Campbell; Douglas C Dahn; Daniel A J Ryan and published on MEASUREMENT SCIENCE AND TECHNOLOGY, 20051201 IOP, BRISTOL, GB - ISSN 0957-0233. Such known device comprises a capacitor used as a sensor for the movement of insects. Anyhow, such device does not provide an overall sensoring of physical conditions and/or environmental conditions inside and/or outside of said hive (Ki) and, at the same time, a detection and control of activity of the insects.

Aim of the present invention is therefore to overcome the drawbacks of the prior art highlighted above.

In particular, an aim of the present invention is to provide a control device, according to claim 1, which is efficient, precise, complete and with a low energy consumption, in order to understand and interpret the activity and behavior of bees at areas and regions where such bees live and feed on.

A further object of the present invention is to provide a control method of the activities of bees, according to claim 6, able to permit an optimal interpretation of the activities and the behavior of bees, and also to define and implement a data bank available and usable worldwide for the study and analysis of the impacts on agriculture and food sector in general.

The structural and functional characteristics of the present invention and its advantages compared with known art will be still more clear and evident from the following subclaims, and in particular through an examination of the following description, with reference to the annexed drawings, which show the schematic of a preferred but not limiting embodiment of a control device, in which:
figure 1 is a front graphical representation of a preferred embodiment of the referred control device;
figure 2 represents the device of figure 1 applied to a beehive; figure 3 is a graphical representation of a group or a community of beehives on which the devices of figure 1 are applied;
figures 4, 5 and 5a are a structural schematics of the device of figure 1 ; and
figure 6 shows graphically a schematic of the application and of the general functional operation of the detection and control devices actuating the subject method.

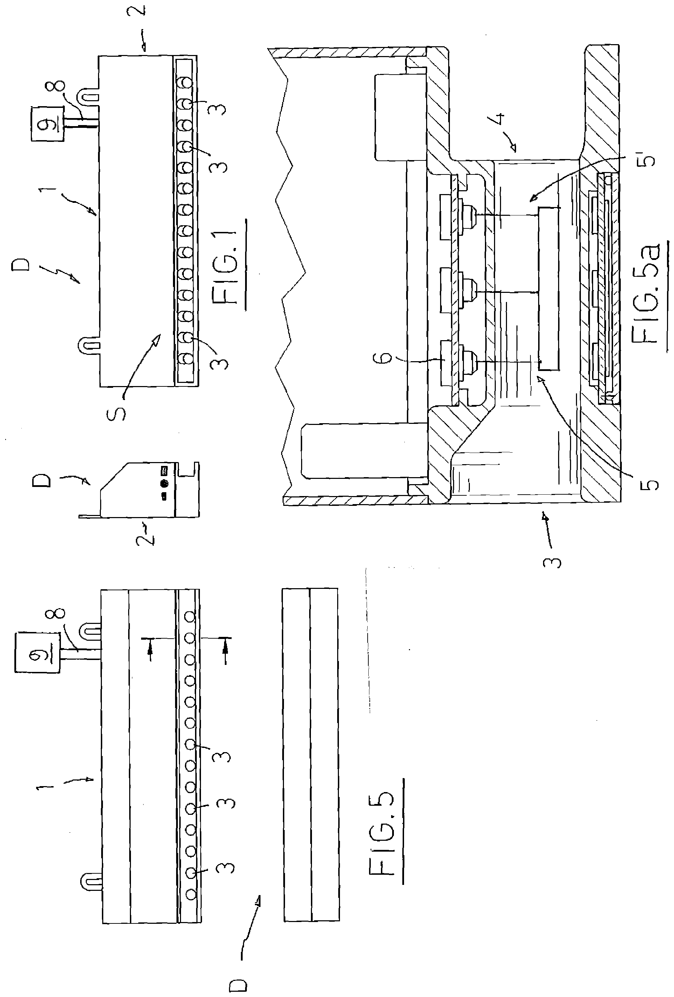

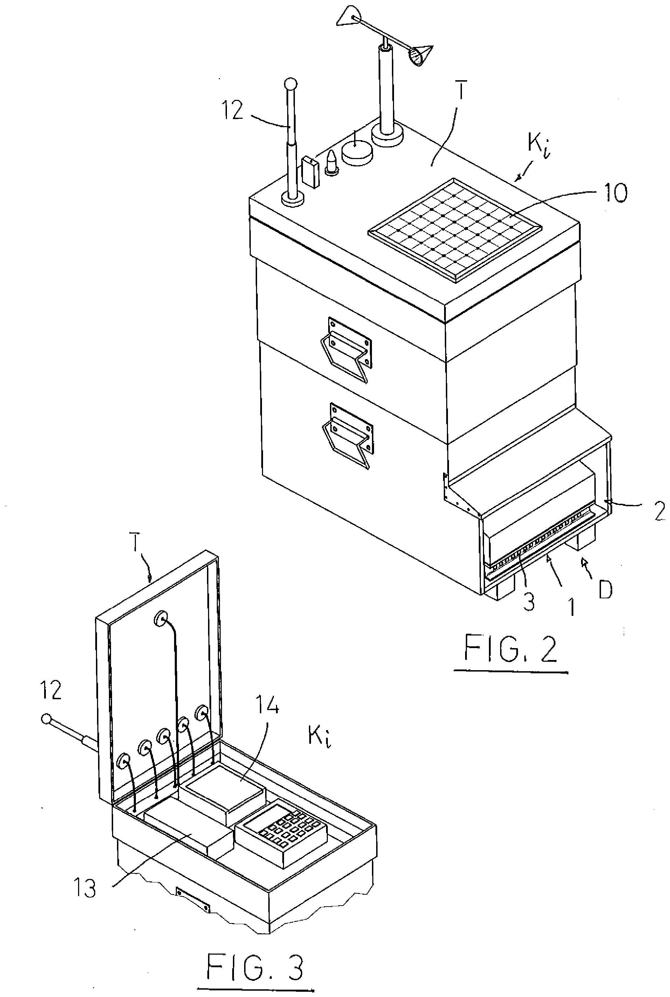

With reference to figures 1 , 2 and 3, D globally indicates a control device able to detect and control the activities of bees A (Figure 3) and able to be applied and installed in one or more beehives Ki (four beehives in Figure 3), where the bees A live, feed on and work. The beehives Ki can be arranged and also cover large areas or regions of great size.

The device D includes an element or panel 1 for detection and control, which is able to be applied on the front inlet part 2 of each beehive Ki and is provided with a series of holes 3 or cylindrical gates among them and uniformly distributed preferably linear or with a plurality of superimposed rows.

Each hole 3 defines an access hole to the beehive Ki and has a diameter and a length suitably studied and such to permit easy passage of bees A through hole 3, and then the same entry and exit of the bees from the beehive Ki of the bees A themselves.

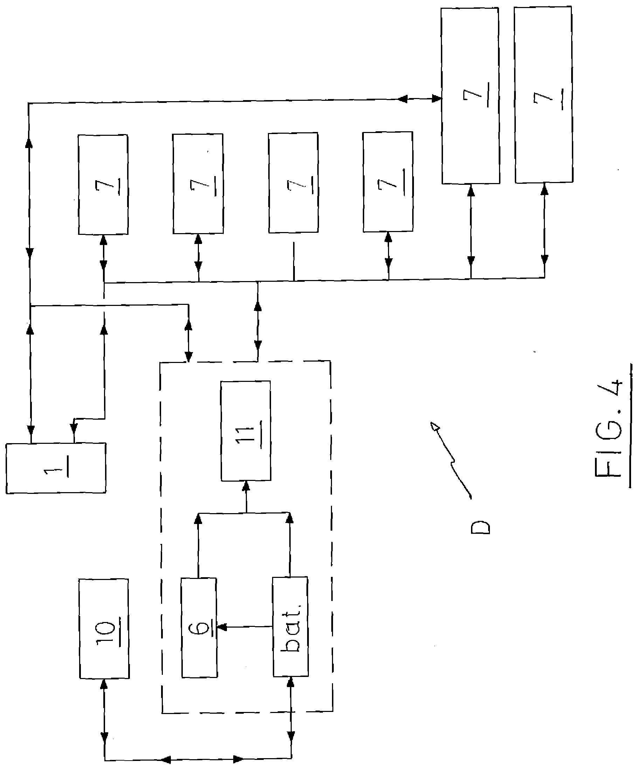

As shown in figures 5 and 5a, each access hole 3 is provided inside a pair 4 of corresponding proximity sensors 5 and 5', suitably spaced and electrically connected to each other, so as to define an electromagnetic field G for detection and control, which is crossed by the bees entering and exiting from their beehive, so in both directions of movement, from the beehive Ki during normal daily activities and for the duration of use. Each pair 4 of sensors 5 and 5' is also connected to a control and memory unit 6, mounted on the panel 1 , which is therefore able to receive and store data related to the activities of movement and passage of the bees A through holes 3. As shown in figures 4 and 5, the panel 1 also comprises, in its part facing the inside of the beehive Ki on which it is mounted, further sensor means 7, and a connection 8 to a feeding group 9.

These sensor means 7 are also connected to the unit 6 and preferably include, but are not limited to, a counting sensor of the colony of bees A living inside the beehive Ki, a sensor for detecting the temperature and humidity inside and/or outside the beehive Ki, a sensor for detecting the intensity of light and/or wind and/or rain at the beehive Ki, a sensor able to detect intrinsic characteristics as for example the swarm of bees A or the weight of the beehive Ki.

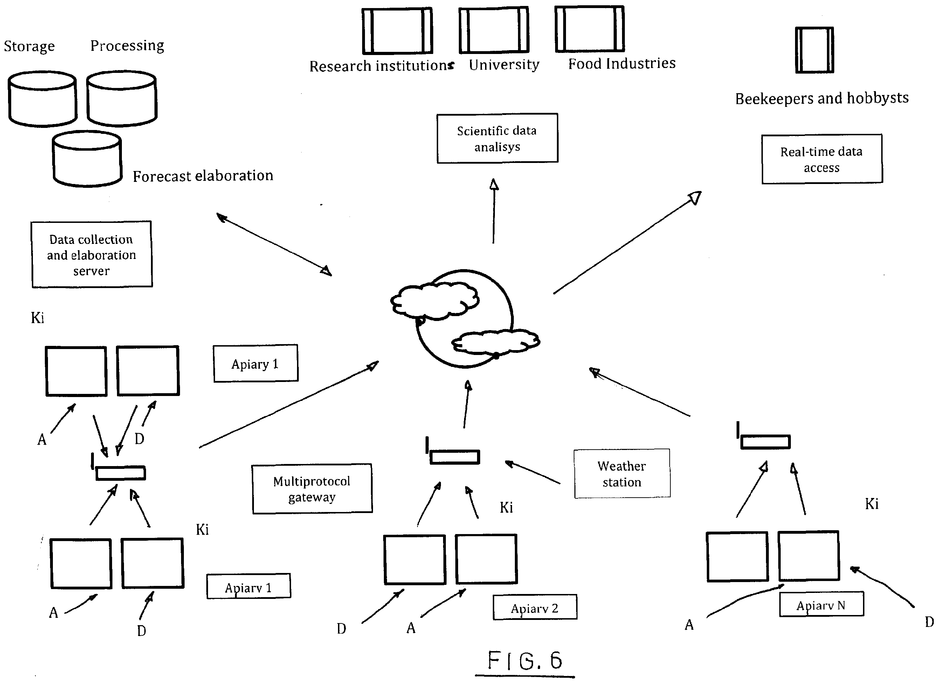

It is also possible to use sensors as microphones, sensors or theft protection of the beehive Ki, or sensors able diagnostically control the status of one or more photovoltaic panels 10 or equivalent, mounted for example on the roof T of each beehive Ki, which are able to ensure the necessary energy for the normal functioning of the sensor means 4, 5, 5', 7 and of the unit 6 mounted on the panel 1 , defining the aforementioned feeding assembly (Figures 2 and 3). Advantageously, as shown in figures 3, 4 and 6, the unit 6 of the device D is also connected to a module 1 1 of wireless connection, able to permit the external transmission of all data detected and stored in unit 6, through an antenna 12 located outside the beehive Ki, such as, for example on the roof T of each beehive Ki. Thus, it is possible to achieve an easy and rapid diffusion anywhere in the world, also via the world wide web or cloud server, through suitable transmission protocols of all data stored in the unit 6 of each beehive Ki and coordinated by an additional coordinating unit 13 (Figure 3) provided with its own feeding assembly 14, such information being considered essential for analyzing and interpreting the natural environment, such as for example the diffusion of such information data to beekeeper associations (professional or hobbyist), research centers, universities, food industries, data storage centers for the formulation of weather forecast etc. (figure 6).

Such data can therefore be easily accessed through PC, Smartphone, Tablet etc. The infrastructure described above has a preferential example of a system architecture, realized according to a distributed shape.

The system can be made in the same way according to other architectures always of the distributed type, by positioning the sensors in other positions of the beehive Ki or even in integrated form in a single device.

The device and its method described above are, in conclusion, optimally and efficiently able to define and implement a database available and accessible worldwide for the fundamental study and analysis of the activities and behavior of bees, also regarding an interpretation and control of the state of agriculture and of ecosystems in general.

## Claims

1. Device (D) for controlling the activity of a colony of bees (A) or similar, comprising panel means (1) adapted to be mounted at the entrance of at least a hive (Ki) in which said bees (A) live and electromagnetic sensor means (4,5,5', 7) mounted on said panel (1) for detecting physical conditions and/or environmental conditions inside and/or outside of said hive (Ki), and the passage of said bees (A) to and from the interior of said hive (Ki) and for controlling the intrinsic characteristics of said bees (A) and said hive (ki);
a central processing unit (6) connected to said sensor means (4,5,5',7) and power supply means (9,10) for supplying said central unit (6) and said sensor means (4,5,5 ',7), said sensor means (4,5,5',7) comprise diagnostic detecting means of said power supply means (9,10);
said central unit (6) is connected to means (11) for connection and transmission adapted to allow the external transmission of data stored in said unit (6) through antenna means (12) positioned on said hive (Ki);
said panel means (1) are adapted to be applied on the front inlet (2) of said hive (Ki) and are provided with a series (S) of cylindrical passage holes (3) for the passage of said bees (A) entering and exiting from said hive (Ki);
each said hole (3) defining an access hole to the beehive (Ki) and has a diameter and a length to permit easy passage of bees (A) through said hole (3), and then the same entry and exit of the bees from the beehive (Ki) of the bees (A) themselves;
each access hole (3) being provided inside a pair (4) of corresponding proximity sensors (5, 5'), spaced and electrically connected to each other, so as to define an electromagnetic field (G) for detection and control, which is crossed by the bees entering and exiting from their beehive, so in both directions of movement, from the beehive (Ki) during normal daily activities and for the duration of use;each pair (4) of said sensors (5, 5') is also connected to said central unit (6), mounted on the panel (1) , which central unit (6) is therefore able to receive and store data related to the activities of movement and passage of the bees (A) through holes (3).

2. Device according to claim 1, **characterized in that** said sensor means (4,5,5 ', 7) comprise movement detecting means (4,5,5') of said bees (A), said movement detecting means (4,5,5') being arranged inside of said holes (3).

3. Device according to one or more of the preceding claims 1 to 2, **characterized in that** said sensor means (4,5,5', 7) comprise counting means (7) for counting said bees (A).

4. Device according to one or more of the preceding claims 1 to 3, **characterized in that** said sensor means (4,5,5',7) comprise anti-theft security detecting means (7) of said hive (Ki).

5. Device according to any claim 1 to 4, **characterized in that** said power supply means (9,10) comprise photovoltaic panels means (10).

6. Method for controlling the activities of a colony of bees (A) or similar, by means of a device according to any of claims 1 to 4, comprising the step of causing and promoting the passage of said bees (A) through an electromagnetic field for detecting the entrance and exit of said bees (A) from at least a hive (Ki) in which said bees (A) live, and the steps of controlling the physical conditions and environmental conditions inside and/or outside of said hive (Ki) and of controlling the intrinsic characteristics of said bees (A) and/or of said hive (Ki) it further comprises the steps of storing data relating said controlling and transmitting externally said data through antenna means (12) positioned on said hive (Ki);
said passage comprising the step of crossing by said bees (A) of a series (S) of cylindrical holes (3) in which proximity sensor means (4, 5, 5') are positioned.

7. Method according to claim 6, **characterized in that** said passage comprises the step of counting said bees (A).

## Patentansprüche

1. Vorrichtung (D) zur Überwachung der Aktivität eines Bienenvolks (A) oder eines ähnlichen, umfassend Paneelmittel (1), die dazu angepasst sind, am Eingang mindestens eines Bienenstocks (Ki), in dem besagte Bienen (A) leben, montiert zu werden, sowie elektromagnetische Sensormittel (4,5,5',7), die auf besagtem Paneel (1) montiert sind, um physikalische Bedingungen und/oder Umweltbedingungen innerhalb und/oder außerhalb des besagten Bienenstocks (Ki) sowie den Durchgang der besagten Bienen (A) in und aus dem Inneren des besagten Bienenstocks (Ki) zu erfassen und um die intrinsischen Eigenschaften der besagten Bienen (A) und des besagten Bienenstocks (Ki) zu überwachen; eine zentrale Verarbeitungseinheit (6), die mit den besagten Sensormitteln (4,5,5',7) verbunden ist, sowie Stromversorgungsmittel (9,10) zur Versorgung der besagten zentralen Einheit (6) und der besagten Sensormittel (4,5,5',7), wobei die besagten Sensormittel (4,5,5',7) Diagnosedetektionsmittel der besagten Stromversorgungsmittel (9,10) umfassen; wobei die besagte zentrale Einheit (6) mit Mitteln (11) zur Verbindung und Übertragung verbunden ist, die dazu angepasst sind, die externe Übertragung der in der besagten Einheit (6) gespeicherten Daten über Antennenmittel (12), die auf besagtem Bienenstock (Ki) positioniert sind, zu ermöglichen;
wobei die besagten Paneelmittel (1) dazu angepasst sind, an der vorderen Eintrittsöffnung (2) des besagten Bienenstocks (Ki) angebracht zu werden und mit einer Reihe (S) von zylindrischen Durchgangslöchern (3) versehen sind, durch die die besagten Bienen (A) beim Betreten und Verlassen des besagten Bienenstocks (Ki) hindurchgehen;
wobei jedes besagte Loch (3) ein Zugang zum Bienenstock (Ki) bildet und einen Durchmesser und eine Länge aufweist, die den einfachen Durchgang der Bienen (A) durch das besagte Loch (3) ermöglichen und somit den Eintritt und Austritt der Bienen aus dem Bienenstock (Ki) der Bienen (A) selbst erlauben;
wobei jedes Zugangssloch (3) im Inneren mit einem Paar (4) entsprechender Näherungssensoren (5,5') versehen ist, die zueinander beabstandet und elektrisch miteinander verbunden sind, um ein elektromagnetisches Feld (G) zur Detektion und Überwachung zu definieren, das von den Bienen beim Betreten und Verlassen ihres Bienenstocks in beiden Bewegungsrichtungen durchquert wird, während der normalen täglichen Aktivitäten und für die gesamte Dauer der Nutzung; wobei jedes Paar (4) der besagten Sensoren (5,5') ebenfalls mit der besagten zentralen Einheit (6) verbunden ist, die auf dem Paneel (1) montiert ist, sodass die besagte zentrale Einheit (6) in der Lage ist, Daten bezüglich der Bewegungs- und Durchgangsaktivitäten der Bienen (A) durch die Löcher (3) zu empfangen und zu speichern.

2. Vorrichtung nach Anspruch 1, **dadurch gekennzeichnet, dass** die besagten Sensormittel (4,5,5',7) Bewegungserfassungsmittel (4,5,5') der besagten Bienen (A) umfassen, wobei die besagten Bewegungserfassungsmittel (4,5,5') innerhalb der besagten Löcher (3) angeordnet sind.

3. Vorrichtung nach einem oder mehreren der vorhergehenden Ansprüche 1 bis 2, **dadurch gekennzeichnet, dass** die besagten Sensormittel (4,5,5',7) Zählmittel (7) zum Zählen der besagten Bienen (A) umfassen.

4. Vorrichtung nach einem oder mehreren der vorhergehenden Ansprüche 1 bis 3, **dadurch gekennzeichnet, dass** die besagten Sensormittel (4,5,5',7) Sicherheitsdetektionsmittel (7) gegen Diebstahl des besagten Bienenstocks (Ki) umfassen.

5. Vorrichtung nach einem der Ansprüche 1 bis 4, **dadurch gekennzeichnet, dass** die besagten Stromversorgungsmittel (9,10) Photovoltaikpaneelmittel (10) umfassen.

6. Verfahren zur Überwachung der Aktivitäten eines Bienenvolks (A) oder eines ähnlichen mittels einer Vorrichtung nach einem der Ansprüche 1 bis 4, umfassend den Schritt des Verursachens und Förderns des Durchgangs der besagten Bienen (A) durch ein elektromagnetisches Feld zur Erfassung des Eintritts und Austritts der besagten Bienen (A) aus mindestens einem Bienenstock (Ki), in dem die besagten Bienen (A) leben, sowie die Schritte der Überwachung der physikalischen und Umweltbedingungen innerhalb und/oder außerhalb des besagten Bienenstocks (Ki) und der Überwachung der intrinsischen Eigenschaften der besagten Bienen (A) und/oder des besagten Bienenstocks (Ki), weiterhin umfassend die Schritte der Speicherung von Daten bezüglich der Überwachung und der externen Übertragung der besagten Daten über Antennenmittel (12), die auf dem besagten Bienenstock (Ki) positioniert sind;
wobei der besagte Durchgang den Schritt des Durchquerens einer Reihe (S) von zylindrischen Löchern (3) durch die besagten Bienen (A) umfasst, in denen Näherungssensormittel (4,5,5') positioniert sind.

7. Verfahren nach Anspruch 6, **dadurch gekennzeichnet, dass** der besagte Durchgang den Schritt des Zählens der besagten Bienen (A) umfasst.

## Revendications

1. Dispositif (D) pour contrôler l'activité d'une colonie d'abeilles (A) ou similaire, comprenant des moyens de panneau (1) adaptés à être montés à l'entrée d'au moins une ruche (Ki) dans laquelle vivent lesdites abeilles (A) et des moyens de capteurs électromagnétiques (4,5,5',7) montés sur ledit panneau (1) pour détecter des conditions physiques et/ou des conditions environnementales à l'intérieur et/ou à l'extérieur de ladite ruche (Ki), ainsi que le passage desdites abeilles (A) vers et depuis l'intérieur de ladite ruche (Ki) et pour contrôler les caractéristiques intrinsèques desdites abeilles (A) et de ladite ruche (Ki);
une unité centrale de traitement (6) connectée auxdits moyens de capteurs (4,5,5',7) et des moyens d'alimentation électrique (9,10) pour alimenter ladite unité centrale (6) et lesdits moyens de capteurs (4,5,5',7), lesdits moyens de capteurs (4,5,5',7) comprenant des moyens de détection diagnostique desdits moyens d'alimentation électrique (9,10);
ladite unité centrale (6) étant connectée à des moyens (11) de connexion et de transmission adaptés à permettre la transmission externe des données stockées dans ladite unité (6) via des moyens d'antenne (12) positionnés sur ladite ruche (Ki);
lesdits moyens de panneau (1) étant adaptés à être appliqués sur l'entrée frontale (2) de ladite ruche (Ki) et étant pourvus d'une série (S) de trous cylindriques de passage (3) pour le passage desdites abeilles (A) entrant et sortant de ladite ruche (Ki);
chacun desdits trous (3) définissant un trou d'accès à la ruche (Ki) et ayant un diamètre et une longueur permettant le passage aisé des abeilles (A) à travers ledit trou (3) et donc l'entrée et la sortie des abeilles elles-mêmes de la ruche (Ki);
chaque trou d'accès (3) étant pourvu, à l'intérieur, d'une paire (4) de capteurs de proximité correspondants (5,5'), espacés et électriquement connectés l'un à l'autre, de manière à définir un champ électromagnétique (G) de détection et de contrôle, traversé par les abeilles entrant et sortant de leur ruche, dans les deux directions de mouvement, depuis la ruche (Ki) lors des activités quotidiennes normales et pour toute la durée d'utilisation;
chaque paire (4) desdits capteurs (5,5') étant également connectée à ladite unité centrale (6), montée sur le panneau (1), ladite unité centrale (6) étant ainsi capable de recevoir et de stocker des données relatives aux activités de mouvement et de passage des abeilles (A) à travers les trous (3).

2. Dispositif selon la revendication 1, **caractérisé en ce que** lesdits moyens de capteurs (4,5,5',7) comprennent des moyens de détection de mouvement (4,5,5') desdites abeilles (A), lesdits moyens de détection de mouvement (4,5,5') étant disposés à l'intérieur desdits trous (3).

3. Dispositif selon une ou plusieurs des revendications précédentes 1 à 2, **caractérisé en ce que** lesdits moyens de capteurs (4,5,5',7) comprennent des moyens de comptage (7) pour compter lesdites abeilles (A).

4. Dispositif selon une ou plusieurs des revendications précédentes 1 à 3, **caractérisé en ce que** lesdits moyens de capteurs (4,5,5',7) comprennent des moyens de détection de sécurité antivol (7) de ladite ruche (Ki).

5. Dispositif selon l'une quelconque des revendications 1 à 4, **caractérisé en ce que** lesdits moyens d'alimentation électrique (9,10) comprennent des moyens de panneaux photovoltaïques (10).

6. Procédé pour contrôler les activités d'une colonie d'abeilles (A) ou similaire, au moyen d'un dispositif selon l'une quelconque des revendications 1 à 4, comprenant l'étape de provoquer et de favoriser le passage desdites abeilles (A) à travers un champ électromagnétique pour détecter l'entrée et la sortie desdites abeilles (A) d'au moins une ruche (Ki) dans laquelle vivent lesdites abeilles (A), ainsi que les étapes de contrôle des conditions physiques et des conditions environnementales à l'intérieur et/ou à l'extérieur de ladite ruche (Ki) et de contrôle des caractéristiques intrinsèques desdites abeilles (A) et/ou de ladite ruche (Ki);
il comprend en outre les étapes de stockage des données relatives audit contrôle et de transmission externe desdites données via des moyens d'antenne (12) positionnés sur ladite ruche (Ki);
ledit passage comprenant l'étape de traversée par lesdites abeilles (A) d'une série (S) de trous cylindriques (3) dans lesquels sont positionnés des moyens de capteurs de proximité (4,5,5').

7. Procédé selon la revendication 6, **caractérisé en ce que** ledit passage comprend l'étape de comptage desdites abeilles (A).
